# NEUE EUROPÄISCHE PATENTSCHRIFT

(11) **EP 3 442 737 B2**
(45) Veröffentlichungstag und Bekanntmachung des Hinweises auf die Entscheidung über den Einspruch: **30.08.2023**
(45) Hinweis auf die Patenterteilung: 09.09.2020
(21) Anmeldenummer: 17739194.3
(22) Anmeldetag: 10.07.2017
(51) Int. Cl.: B23F 23/12, B23F 19/05, B24B 53/075

(54) **VERFAHREN UND VORRICHTUNG ZUM HARTFEINBEARBEITEN INNENVERZAHNTER ZAHNRÄDER MITTELS EINER VERZAHNUNGSHONMASCHINE**
METHOD AND DEVICE FOR HARD-FINE MACHINING INTERNALLY TOOTHED GEARWHEELS BY MEANS OF A TOOTHED HONING MACHINE
PROCÉDÉ ET DISPOSITIF POUR L'USINAGE DUR ET FIN DE ROUES DENTÉES À DENTURE INTÉRIEURE AU MOYEN D'UNE MACHINE À RODER POUR LA FABRICATION D'ENGRENAGES

(30) Priorität: 03.08.2016 DE 102016009469
(43) Veröffentlichungstag der Anmeldung: 20.02.2019
(73) Patentinhaber: Audi AG, 85045 Ingolstadt (DE)
(72) Erfinder: HEILMANN, Markus, 85748 Garching (DE); SCHIMMER, Thomas, 85051 Ingolstadt (DE); BURATOWSKI, Philipp, 91799 Langenaltheim (DE)
(86) Internationale Anmeldenummer: PCT/EP2017/000811
(87) Internationale Veröffentlichungsnummer: WO 2018/024356

(56) Entgegenhaltungen:
- EP-A1- 0 186 101
- EP-A1- 0 688 623
- EP-A2- 0 282 046
- EP-A2- 2 036 675
- DE-A1- 2 719 524
- DE-A1- 10 305 752
- DE-A1- 19 630 486
- DE-A1-102012 015 846
- DE-A1-102015 120 556
- DE-U1- 9 300 936
- FR-A- 879 288

## Beschreibung

Die vorliegende Erfindung betrifft ein Verfahren zum Bearbeiten eines innenverzahnten Werkstücks sowie ein Werkzeug und eine Kombination einer Verzahnungshonmaschine und eines Werkstücks.

Das Dokument DE19630486 offenbart ein Verfahren zum Bearbeiten eines innenverzahnten Werkstücks, und das Dokument EP 0 688 623 A1 offenbart ein Werkzeug zum Bearbeiten eines innenverzahnten Werkstücks, wobei das Werkzeug zumindest teilweise aus einem hochharten Schneidstoff besteht, sowie die Kombination einer Verzahnungshonmaschine mit einem innenverzahnten Werkstück.

Insbesondere in Getrieben, wie bspw. Planetengetrieben, werden innenverzahnte Hohlräder, d. h. Zahnräder mit einer Innenverzahnung, eingesetzt. Eine Innenverzahnung eines Zahnrads ist traditionell nur mit sehr großem Aufwand auf ein Qualitätsniveau, wie es für Zahnräder mit Außenverzahnung typisch ist, zu heben. Stand der Technik ist, dass die Innenverzahnung eines jeweiligen Zahnrads weichbearbeitet und anschließend gehärtet wird. Es erfolgt insbesondere bei einer Großserienfertigung keine Hartfeinbearbeitung, da eine Hartfeinbearbeitung mit enorm hohen Kosten verbunden ist.

Eine fehlende Hartfeinbearbeitung führt zu einer im Vergleich zu außenverzahnten Zahnrädern schlechteren Qualität, d. h. zu einem geringeren Verschleiß und einer ggf. erhöhten Geräuschemission beim Betrieb in bspw. einem Getriebe. Gängige Verfahren zur Hartfeinbearbeitung von innenverzahnten Zahnrädern, bspw. durch Profilschleifen, sind mit enormen Kosten verbunden.

In der deutschen Druckschrift DE 10 2012 108 717 A1 wird ein Abrichtverfahren mit einer geometrisch bestimmten Schneide eines Honrings beschrieben.

Die deutsche Druckschrift DE 196 25 285 A1 offenbart eine Bearbeitung eines Hohlrades mit einem umformenden, spanlosen Verfahren zur Glättung von Zahnflanken.

Eine Maschinentechnik, durch die es möglich ist, mit Hilfe eines Führungsgetriebes schon bei einer Arbeitsdrehzahl eine Bearbeitung eines Zahnrads zu beginnen und eine Einflankenbearbeitung des Zahnrades durchzuführen, ist in der deutschen Druckschrift DE 350 19 35 C1 offenbart.

Vor diesem Hintergrund wird ein Verfahren gemäß Anspruch 1 zum Bearbeiten eines innenverzahnten Werkstücks vorgestellt, bei dem das Werkstück in eine Verzahnungshonmaschine eingespannt wird, und bei dem mindestens ein Werkzeug, das zumindest teilweise aus einem hochharten Schneidstoff besteht, an jeweiligen Zähnen des innenverzahnten Werkstücks entlang geführt wird, um eine Hartfeinbearbeitung der Zähne des innenverzahnten Werkstücks durchzuführen.

Das vorgestellte Verfahren dient insbesondere zum Hartfeinbearbeiten eines gehärteten innenverzahnten Zahnrads in einem schnell durchzuführenden Prozess, der auch für den Einsatz in der Großserienfertigung geeignet ist. Dazu ist vorgesehen, dass ein jeweiliges innenverzahntes Zahnrad bzw. Hohlrad in eine Verzahnungshonmaschine, insbesondere an die Stelle eines Honrings eingesetzt wird, und mindestens ein Werkzeug, das zumindest teilweise aus einem hochharten Schneidstoff besteht, an jeweiligen Zähnen des Zahnrads entlang geführt wird, so dass das mindestens eine Werkzeug beim Bewegen entlang der Zähne des Zahnrads in jeweilige Zwischenräume zwischen den Zähnen eindringt und dabei an den jeweiligen Flanken und/oder gegebenenfalls Zahnfüßen der Zähne ein Materialabtrag stattfindet.

Es ist insbesondere vorgesehen, dass zur Durchführung des vorgestellten Verfahrens eine Verzahnungshonmaschine verwendet wird, die das erfindungsgemäß vorgesehene mindestens eine Werkzeug mit einer Maschinenkinematik bewegt, die für ein Verfahren zum Leistungshonen vorgesehen ist, so dass an der Verzahnungshonmaschine für das erfindungsgemäß vorgesehene Verfahren nach einem Vorgang zum Leistungshonen kein neuer Bewegungsablauf eingestellt werden muss.

Gemäß dem vorgestellten Verfahren ist insbesondere vorgesehen, dass ein jeweiliges innenverzahntes Zahnrad in einem spanenden Verfahren mit geometrisch unbestimmter Schneide bearbeitet wird.

In einer möglichen Ausgestaltung des vorgestellten Verfahrens ist vorgesehen, dass als hochharter Schneidstoff beispielsweise polykristalliner Diamant oder insbesondere kubisches Bornitrid (cBN) gewählt wird.

In einer weiteren möglichen Ausgestaltung des vorgestellten Verfahrens ist vorgesehen, dass als das mindestens eine Werkzeug ein außenverzahntes zahnradförmiges Werkzeug gewählt wird, wobei das mindestens eine Werkzeug um ein Vielfaches, insbesondere ein Zweifaches oder ein Dreifaches breiter ist als das Werkstück.

Mittels eines Werkzeugs, das in seinen Abmaßen, insbesondere in seiner Breite, die Abmaße eines jeweiligen Werkstücks übersteigt, ist es möglich, das Werkzeug an dem Werkstück so zu verschieben, dass das Werkzeug das Werkstück mit unterschiedlichen Bereichen kontaktiert und entsprechend bearbeitet. Dazu kann das Werkzeug breiter sein als das Werkstück und entsprechend gegenüber dem Werkstück in axialer Richtung, insbesondere entlang einer horizontal oder vertikal durch einen Mittelpunkt des Werkzeugs verlaufenden Achse, oder über eine Änderung eines jeweiligen Achskreuzwinkels relativ zu dem Werkstück, je nach gewünschtem Prozessablauf, in Einzelachs- der Mehrachssynchronbewegung verschoben werden.

In einer möglichen Ausgestaltung des vorgestellten Verfahrens ist vorgesehen, dass ein Achskreuzwinkel des mindestens einen Werkzeugs zu dem Werkstück verändert wird, so dass das Werkstück das mindestens eine Werkzeug an einem vorgegebenen Punkt kontaktiert.

In einer weiteren möglichen Ausgestaltung des vorgestellten Verfahrens ist vorgesehen, dass das Werkzeug axial entlang einer horizontal oder vertikal durch einen Mittelpunkt des Werkzeugs verlaufenden Achse verschoben wird, so dass das Werkstück das mindestens eine Werkzeug an einem vorgegebenen Punkt kontaktiert.

Mittels einer axialen Verschiebung eines jeweiligen Werkzeugs, d. h. einer Verschiebung entlang bspw. einer vertikal oder horizontal durch einen Mittelpunkt des Werkzeugs verlaufenden Achse, kann eine Kontaktstelle des Werkzeugs mit dem Werkstück, je nach relativer Ausrichtung des Werkzeugs zu dem Werkstück, eingestellt werden. Dies bedeutet bspw., dass das Werkzeug als Ganzes relativ zu dem Werkstück verschoben wird, um eine Kontaktstelle des Werkzeugs mit dem Werkstück einzustellen.

In einer möglichen Ausgestaltung des vorgestellten Verfahrens ist vorgesehen, dass das mindestens eine Werkzeug entlang einer Längsachse des mindestens einen Werkzeugs verschiedene Bereiche mit unterschiedlichen Oberflächeneigenschaften aufweist, und das mindestens eine Werkzeug in einer vorgegebenen Bewegungsabfolge an dem Werkstück entlang bewegt wird, um das Werkstück aufeinanderfolgend mit jeweiligen Bereichen des mindestens einen Werkzeugs, die unterschiedliche Oberflächeneigenschaften aufweisen, zu kontaktieren und entsprechend zu bearbeiten. Die Bearbeitung kann in einer kontinuierlichen Bewegung sowie in einem unterbrochenen Schnitt erfolgen. Dabei kann die Bearbeitung insbesondere zur Verbesserung von Oberflächeneigenschaften des Werkstücks eingesetzt werden.

Um ein jeweiliges Werkstück in einem Arbeitsgang bzw. mit einer Maschine und einem jeweiligen Werkzeug so zu bearbeiten, dass das Werkstück nach dem Arbeitsgang einsatzbereit ist, kann das Werkzeug mehrere Bereiche mit bspw. unterschiedlicher Rauheit aufweisen, die aufeinanderfolgend oder abwechselnd mit dem Werkstück in Kontakt gebracht werden, indem das Werkzeug insbesondere axial, d. h. entlang bspw. einer vertikal oder horizontal durch einen Mittelpunkt des Werkzeugs verlaufenden Achse, gegenüber dem Werkstück verschoben oder ein Achskreuzwinkel des Werkzeugs gegenüber dem Werkstück geändert wird. Dies bedeutet, dass mittels eines jeweiligen Werkzeugs bspw. zunächst ein Schruppprozess und anschließend ein Schlichtprozess durchgeführt werden kann.

Es ist ferner denkbar, dass das erfindungsgemäß vorgesehene mindestens eine Werkzeug mehrere Bereiche gleicher Rauheit aufweist und das mindestens eine Werkzeug derart bewegt wird, dass sich eine Kontaktstelle des mindestens einen Werkzeugs mit dem Werkstück ändert, so dass das mindestens eine Werkzeug über die Zeit hinweg an einer Vielzahl Stellen mit dem Werkstück in Kontakt tritt und einzelne Stellen bzw. Bereiche des mindestens einen Werkzeugs entlastet werden, wodurch sich eine Standzeit des mindestens einen Werkzeugs gegenüber einem Verfahren mit einer dauerhaften Kontaktierung an einer Stelle bzw. in einem Bereich erhöht.

Es ist ferner denkbar, dass in Ausgestaltung des vorgestellten Verfahrens mindestens ein abrichtbares Werkzeug verwendet wird, das mittels eines Abrichtwerkzeugs abzurichten, d. h. zu profilieren und/oder zu schärfen, ist. Dabei ist selbstverständlich denkbar, dass das mindestens eine Werkzeug bereichsweise abgerichtet wird, während das mindestens eine Werkzeug an einem jeweiligen Werkstück entlang verschoben wird, um eine jeweilige Kontaktstelle zwischen dem mindestens einen Werkzeug und dem Werkstück einzustellen und ein paralleles, insbesondere ein hauptzeitparalleles Abrichten zu ermöglichen.

Unter dem Begriff "abrichten" ist im Kontext der vorliegenden Erfindung ein Vorgang zu verstehen, bei dem ein Werkzeug neu profiliert bzw. kalibriert wird.

Ferner betrifft die vorliegende Erfindung ein Werkzeug gemäß Anspruch 7 zum Bearbeiten eines innenverzahnten Werkstücks, wobei das Werkzeug zumindest teilweise aus einem hochharten Schneidstoff besteht.

Das vorgestellte Werkzeug dient insbesondere zur Durchführung des vorgestellten Verfahrens.

In einer möglichen Ausgestaltung des vorgestellten Werkzeugs ist vorgesehen, dass das Werkzeug dazu konfiguriert ist, jeweils eine Zahnflanke eines Zahns des innenverzahnten Werkstücks oder zwei Zahnflanken und/oder einen Zahnfuß jeweiliger an eine Ausnehmung des innenverzahnten Werkstücks angrenzender Zähne gleichzeitig zu bearbeiten während das Werkzeug an dem innenverzahnten Werkstück entlang bewegt wird.

Das vorgestellte Werkzeug hat die Form eines außenverzahnten Zahnrads.

Ferner betrifft die vorliegende Erfindung die Kombination gemäß Anspruch 10 einer Verzahnungshonmaschine und eines innenverzahnten Werkstücks.

Die vorgestellte Kombination dient insbesondere zur Durchführung des vorgestellten Verfahrens.

Mittels eines Abrichtungswerkzeugs, wie bspw. einer Abrichtrolle, die insbesondere beweglich an der erfindungsgemäßen Verzahnungshonmaschine angeordnet ist, kann das erfindungsgemäß vorgesehene Werkzeug effizient und ohne Werkzeugwechsel abgerichtet werden. Das Abrichtwerkzeug kann insbesondere wie eine Schleifschnecke beim Wälzschleifen geformt sein, um ein schnelles Abrichten in einem kontinuierlichen Verfahren zu ermöglichen.

Es ist denkbar, dass das erfindungsgemäß vorgesehene Werkzeug im Betrieb, d. h. während einer Bewegung entlang eines jeweiligen Werkstücks, oder in einer Pause, d. h. in einer Betriebsphase, in der das Werkzeug in eine Abrichtstellung gefahren wird, abgerichtet wird.

Weitere Vorteile und Ausgestaltungen der Erfindung ergeben sich aus der Beschreibung und der beiliegenden Zeichnung.

Die Erfindung ist anhand von Ausführungsformen in der Zeichnung schematisch dargestellt und wird unter Bezugnahme auf die Zeichnung schematisch und ausführlich beschrieben.

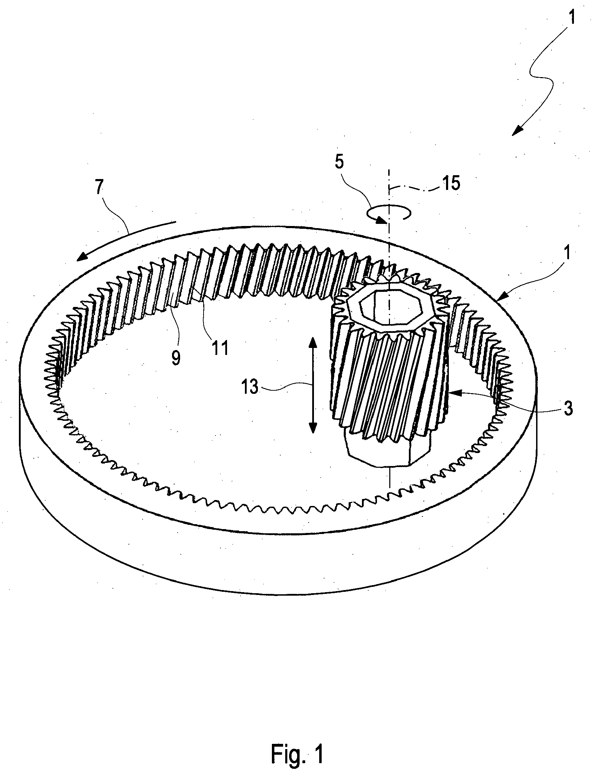

Figur 1 zeigt eine mögliche Ausgestaltung eines zur Durchführung einer möglichen Ausgestaltung des vorgestellten Verfahrens konfigurierten erfindungsgemäßen Werkzeugs.

In Figur 1 ist ein Werkstück 1 in Form eines innenverzahnten Zahnrads dargestellt. Das Werkstück 1 wurde in eine nicht dargestellte Verzahnungshonmaschine an die Stelle eingespannt, an der traditionellerweise ein Honring eingespannt ist, wenn die Verzahnungshonmaschine zum Honen verwendet wird.

Um jeweilige Zähne, d. h. insbesondere Zahnflanken und/oder Zahnfüße des Werkstücks 1 hartfein zu bearbeiten, ist vorgesehen, dass ein Werkzeug 3 an eine Stelle der Verzahnungshonmaschine eingebracht wird, an der traditionellerweise ein Werkstück eingespannt wird, wenn die Verzahnungshonmaschine zum Honen verwendet wird. Dies bedeutet, dass das Werkzeug 3 und das Werkstück 1 so unter einem Achskreuzwinkel angeordnet und rotiert werden, dass ein Materialabtrag an jeweiligen Zähnen des Werkstücks 1 stattfindet. Dabei kann das Werkzeug 3 entlang einer Achse 15 des Werkzeugs 3 bewegt werden, wie durch Pfeil 13 angedeutet. Das Werkstück 1 kann auch selbst bewegt werden, wie durch Pfeil 7 angedeutet, um eine Abrollbewegung des Werkzeugs 3 an den Zähnen zu unterstützen.

Das Werkstück 1 umfasst an jeweiligen Zähnen Zahnflanken 9, die aus gehärtetem Material bestehen. Um die Zahnflanken 9 fein zu bearbeiten, umfasst das Werkzeug 3 eine Beschichtung aus einem hochharten bzw. hochfesten Schneidstoff, wie bspw. Diamant oder Bornitrid.

Vorliegend ist das Werkzeug 3 für einen Einflankenkontakt, d. h. eine Bearbeitung lediglich einer Zahnflanke 9 pro Bewegung des Werkzeugs 3 konfiguriert. Selbstverständlich kann das Werkzeug 3 auch dazu konfiguriert sein, zwei Zahnflanken 9 und/oder einen Zahnfuß 11 des Werkstücks 1 pro Bewegung, d. h. bei einem Eintauchen in eine zwischen zwei Zähnen gebildete Ausnehmung, zu ermöglichen.

## Patentansprüche

1. Verfahren zum Bearbeiten eines innenverzahnten Werkstücks (1), bei dem das Werkstück (1) anstelle eines Honrings in eine Aufnahme einer Verzahnungshonmaschine eingespannt wird, wobei die Aufnahme eine Aufnahme ist, in die in einem Honbetrieb der Verzahnungshonmaschine ein Honring zur Bearbeitung eines außenverzahnten Werkstücks einzusetzen ist, und bei dem mindestens ein Werkzeug (3), das zumindest teilweise aus einem hochharten Schneidstoff besteht, an jeweiligen Zähnen des innenverzahnten Werkstücks (1) entlang geführt wird, um eine Hartfeinbearbeitung der Zähne des innenverzahnten Werkstücks (1) durchzuführen, wobei als das mindestens eine Werkzeug (3) mindestens ein außenverzahntes zahnradförmiges Werkzeug (3) gewählt wird, das um ein Vielfaches, insbesondere ein Zweifaches oder ein Dreifaches breiter ist als das Werkstück (1) und wobei das mindestens eine Werkzeug (3) entlang einer Längsachse (15) des Werkzeugs (3) verschiedene Bereiche mit unterschiedlichen Oberflächeneigenschaften aufweist, und bei dem das mindestens eine Werkzeug (3) in einer vorgegebenen Bewegungsabfolge an dem Werkstück (1) entlang bewegt wird, um das Werkstück (1) aufeinanderfolgend mit jeweiligen Bereichen des mindestens einen Werkzeugs (3), die unterschiedliche Oberflächeneigenschaften aufweisen, zu kontaktieren und entsprechend zu bearbeiten.

2. Verfahren nach Anspruch 1, bei dem als Werkstück (1) ein innenverzahntes Zahnrad (1) mit gehärteten Zahnflanken (9) gewählt wird.

3. Verfahren nach Anspruch 1 oder 2, bei dem als hochharter Schneidstoff polykristalliner Diamant, insbesondere ein keramisch gebundener Diamant, gewählt wird.

4. Verfahren nach Anspruch 1 oder 2, bei dem als hochharter Schneidstoff Bornitrid, insbesondere kubisches keramisch gebundenes Bornitrid gewählt wird.

5. Verfahren nach Anspruch 1, bei dem ein Achskreuzwinkel des mindestens einen Werkzeugs (3) zu dem Werkstück (1) verändert wird, so dass das Werkstück (1) das mindestens eine Werkzeug (3) an einem vorgegebenen Punkt kontaktiert.

6. Verfahren nach Anspruch 1, bei dem das Werkzeug (3) axial entlang einer horizontal oder vertikal durch einen Mittelpunkt des Werkzeugs (3) verlaufenden Achse (15) verschoben wird, so dass das Werkstück (1) das mindestens eine Werkzeug (3) an einem vorgegebenen Punkt kontaktiert.

7. Werkzeug zum Bearbeiten eines innenverzahnten Werkstücks (1), wobei das Werkzeug (3) zumindest teilweise aus einem hochharten Schneidstoff besteht, **dadurch gekennzeichnet, dass** das Werkzeug die Form eines außenverzahnten Zahnrads hat und entlang einer Längsachse des Werkzeugs (3) verschiedene Bereiche mit unterschiedlichen Oberflächeneigenschaften aufweist,.

8. Werkzeug nach Anspruch 7, wobei das Werkzeug (3) dazu konfiguriert ist, jeweils eine Zahnflanke (9) eines Zahns des innenverzahnten Werkstücks (1) oder zwei Zahnflanken (9) und/oder einen Zahnfuß (11) jeweiliger an eine Ausnehmung des innenverzahnten Werkstücks (1) angrenzender Zähne gleichzeitig zu bearbeiten, während das Werkzeug (3) an dem innenverzahnten Werkstück (1) entlang bewegt wird.

9. Werkzeug nach Anspruch 7 oder 8, wobei das Werkzeug (3) abrichtbar ausgestaltet ist.

10. Kombination einer Verzahnungshonmaschine mit einer Aufnahme für ein Werkstück (1) und einem schneckenförmigen Abrichtwerkzeug, das in einem kontinuierlichem Verfahren arbeitet, und eines innenverzahnten Werkstücks (1), wobei das Abrichtwerkzeug dazu konfiguriert ist, mindestens ein innen an dem in der Aufnahme eingebrachten innenverzahnten Werkstück (1) entlang zu bewegendes Werkzeug (3), das zumindest teilweise aus einem hochharten Schneidstoff besteht, zumindest bereichsweise abzurichten, wobei die Aufnahme eine Aufnahme ist, in die in einem Honbetrieb der Verzahnungshonmaschine ein Honring zur Bearbeitung eines außenverzahnten Werkstücks einzusetzen ist und in die das innenverzahnte Werkstück (1) anstelle des Honrings eingesetzt ist.

## Claims

1. Method for machining an internally toothed workpiece (1), in which the workpiece (1) is chucked instead of a honing ring in a receptacle of a toothed honing machine, wherein the receptacle is a receptacle into which in a honing operation of the toothed honing machine a honing ring is to be set for machining an externally toothed workpiece, and in the case of which at least one tool (3), which consists at least partially of a superhard cutting material, is guided along respective teeth of the internally toothed workpiece (1), in order to carry out a hard-fine machining of the teeth of the internally toothed workpiece (1), wherein at least one externally toothed gearwheel-shaped tool (3) is selected as the at least one tool (3) which is many times broader, in particular twice or three times as broad as the workpiece (1) and wherein the at least one tool (3) along a longitudinal axis (15) of the tool (3) has different regions with different surface properties, and in which the at least one tool (3) is moved in a predetermined movement sequence along the workpiece (1), in order to contact the workpiece (1) consecutively with respective regions of the at least one tool (3), which have different surface properties, and to machine appropriately.

2. Method according to claim 1, in which as workpiece (1) an internally toothed gearwheel (1) is selected with hardened tooth flanks (9).

3. Method according to claim 1 or 2, in which as a super hard cutting material polycrystalline diamond is selected, in particular a vitrified bonded diamond.

4. Method according to claim 1 or 2, in which as a superhard cutting material boron nitride is selected, in particular cubic vitrified bonded boron nitride.

5. Method according to claim 1, in which an axis crossing angle of the at least one tool (3) to the workpiece (1) is altered, such that the workpiece (1) contacts the at least one tool (3) at a predetermined point.

6. Method according to claim 1, in which the tool (3) is shifted axially along an axis (15) extending horizontally or vertically through a middle point of the tool (3), such that the workpiece (1) contacts the at least one tool (3) at a predetermined point.

7. Tool for machining an internally toothed workpiece (1), wherein the tool (3) consists at least partially of a superhard cutting material, **characterised in that** the tool has the form of an externally toothed gearwheel and along a longitudinal axis of the tool (3) has different regions with different surface properties.

8. Tool according to claim 7, wherein the tool (3) is configured to machine simultaneously in each case one tooth flank (9) of a tooth of the internally toothed workpiece (1) or two tooth flanks (9) and/or a tooth base (11) of respective teeth adjoining a recess of the internally toothed workpiece (1), while the tool (3) is moved along the internally toothed workpiece (1).

9. Tool according to claim 7 or 8, wherein the tool (3) is designed to be dressable.

10. Combination of a toothed honing machine having a receptacle for a workpiece (1) and a worm-shaped dressing tool which works in a continuous process, and an internally toothed workpiece (1), wherein the dressing tool is configured to dress at least in regions at least one tool (3), which consists at least partially of a superhard cutting material, and which is to be moved inside along the internally toothed workpiece (1) introduced in the receptacle, wherein the receptacle is a receptacle into which in a honing operation of the toothed honing machine a honing ring is to be set for machining an externally toothed workpiece and into which the internally toothed workpiece (1) is set instead of the honing ring.

## Revendications

1. Procédé pour usiner une pièce à denture intérieure (1), selon lequel la pièce (1) est serrée dans un logement d'une machine à roder pour la fabrication d'engrenages à la place d'une bague à roder, dans lequel le logement est un logement dans lequel, dans un fonctionnement de rodage de la machine à roder pour la fabrication d'engrenages, une bague à roder permettant l'usinage d'une pièce à denture extérieure est destinée à être insérée, et selon lequel au moins un outil (3), qui est constitué au moins en partie d'un matériau de coupe à dureté élevée, est guidé le long de dents respectives de la pièce à denture intérieure (1), afin d'effectuer un usinage dur et fin des dents de la pièce à denture intérieure (1), dans lequel au moins un outil (3) en forme de roue dentée à denture extérieure est choisi comme l'au moins un outil (3) qui est plusieurs fois, en particulier deux fois ou trois fois plus large que la pièce (1) et dans lequel l'au moins un outil (3) présente différentes zones avec des propriétés de surface différentes le long d'un axe longitudinal (15) de l'outil (3), et selon lequel l'au moins un outil (3) est mû dans une séquence de mouvements prédéfinie le long de la pièce (1), afin de mettre en contact la pièce (1) de manière successive avec des zones respectives de l'au moins un outil (3), qui présentent des propriétés de surface différentes, et de l'usiner de manière correspondante.

2. Procédé selon la revendication 1, selon lequel une roue dentée à denture intérieure (1) avec des flancs (9) durcis est choisie comme pièce (1).

3. Procédé selon la revendication 1 ou 2, selon lequel un diamant polycristallin, en particulier un diamant à liaison céramique, est choisi comme matériau de coupe à dureté élevée.

4. Procédé selon la revendication 1 ou 2, selon lequel du nitrure du bore, en particulier du nitrure de bore cubique à liaison céramique, est choisi comme matériau de coupe à dureté élevée.

5. Procédé selon la revendication 1, selon lequel un angle de croisement d'axes de l'au moins un outil (3) par rapport à la pièce (1) est modifié de sorte que la pièce (1) soit en contact avec l'au moins un outil (3) en un point prédéfini.

6. Procédé selon la revendication 1, selon lequel l'outil (3) est déplacé axialement le long d'un axe (15) s'étendant horizontalement ou verticalement à travers un centre de l'outil (3) de sorte que la pièce (1) soit en contact avec l'au moins un outil (3) en un point prédéfini.

7. Outil pour usiner une pièce à denture intérieure (1), dans lequel l'outil (3) est constitué au moins en partie d'un matériau de coupe à dureté élevée, **caractérisé en ce que** l'outil présente la forme d'une roue dentée à denture extérieure et le long d'un axe longitudinal de l'outil (3) différentes zones avec des propriétés de surface différentes.

8. Outil selon la revendication 7, dans lequel l'outil (3) est configuré pour usiner simultanément respectivement un flanc de dent (9) d'une dent de la pièce à denture intérieure (1) ou deux flancs de dent (9) et/ou un pied de dent (11) de dents respectives adjacentes à un évidement de la pièce à denture intérieure (1), pendant que l'outil (3) est mû le long de la pièce à denture intérieure (1).

9. Outil selon la revendication 7 ou 8, dans lequel l'outil (3) est conçu avec possibilité de dressage.

10. Combinaison d'une machine à roder pour la fabrication d'engrenages avec un logement pour une pièce (1) et un outil de dressage hélicoïdal, qui fonctionne dans un procédé continu, et d'une pièce à denture intérieure (1), dans laquelle l'outil de dressage est configuré pour dresser au moins par endroits un outil (3) destiné à être mû de façon intérieure le long de la pièce à denture intérieure (1) introduite dans le logement, qui est constitué au moins en partie d'un matériau de coupe à dureté élevée, dans laquelle le logement est un logement dans lequel, dans un fonctionnement de rodage de la machine à roder pour la fabrication d'engrenages, une bague à roder permettant l'usinage d'une pièce à denture extérieure est destinée à être insérée et dans lequel la pièce à denture intérieure (1) est insérée à la place de la bague à roder.
